# EUROPEAN PATENT SPECIFICATION

(11) **EP 4 471 899 B1**
(45) Date of publication and mention of the grant of the patent: **16.09.2026**
(21) Application number: 23860688.3
(22) Date of filing: 24.07.2023
(51) Int. Cl.: H01M 4/58, H01M 4/36, H01M 4/13, H01M 4/62, H01M 10/052, H01M 4/02, H01M 4/38, C01B 32/174, H01M 4/1397, H01M 4/136, H01M 4/139

(54) **POSITIVE ELECTRODE MATERIAL FOR LITHIUM-SULFUR BATTERY AND LITHIUM-SULFURBATTERY INCLUDING THE SAME**
POSITIVELEKTRODENMATERIAL FÜR LITHIUM-SCHWEFEL-BATTERIE UND LITHIUMSCHWEFEL-BATTERIE DAMIT
MATÉRIAU D'ÉLECTRODE POSITIVE POUR BATTERIE AU LITHIUM-SOUFRE ET BATTERIE AULITHIUM-SOUFRE LE COMPRENANT

(30) Priority: 31.08.2022 KR 20220110405
(43) Date of publication of application: 04.12.2024
(73) Proprietor: LG Energy Solution, Ltd., Seoul 07335 (KR); Seoul National University R&DB Foundation, Seoul 08826 (KR)
(72) Inventor: KIM, Il-To, Daejeon 34122 (KR); LEE, Jong-Chan, Seoul 08830 (KR); KWON, Jin, Gwangmyeong-si, Gyeonggi-do 14244 (KR); KIM, Soo-Hyun, Daejeon 34122 (KR); YANG, Seung-Bo, Daejeon 34122 (KR); JEONG, Da-Un, Seoul 01417 (KR)
(74) Representative: Goddar, Heinz J.
(86) International application number: PCT/KR2023/010690
(87) International publication number: WO 2024/049006

(56) References cited:
- EP-A1- 3 764 440
- EP-A1- 4 044 284
- EP-B1- 2 927 996
- CN-A- 114 436 240
- KR-A- 20150 116 737
- KR-A- 20180 017 975
- GHOSH ARNAB ET AL: "Sustainable Sulfur-rich Copolymer/Graphene Composite as Lithium-Sulfur Battery Cathode with Excellent Electrochemical Performance", SCIENTIFIC REPORTS, vol. 6, no. 1, 28 April 2016 (2016-04-28), US, XP093143691, ISSN: 2045-2322, DOI: 10.1038/srep25207
- "Cashew Nut Shell Liquid", 2 February 2017, SPRINGER INTERNATIONAL PUBLISHING, ISBN: 978-3-319-47455-7, article ANTONY MENACHERY JINISH ET AL: "Cardanol-Derived-Amphiphiles-Based Soft Templates for Conducting Polymer Nanoarchitectures", pages: 109 - 127, XP093323896, DOI: 10.1007/978-3-319-47455-7_6
- GHOSH ARNAB, SHUKLA SWAPNIL, KHOSLA GAGANPREET SINGH, LOCHAB BIMLESH, MITRA SAGAR: "Sustainable Sulfur-rich Copolymer/Graphene Composite as Lithium-Sulfur Battery Cathode with Excellent Electrochemical Performance", SCIENTIFIC REPORTS, NATURE PUBLISHING GROUP, US, vol. 6, no. 1, US , XP093143691, ISSN: 2045-2322, DOI: 10.1038/srep25207
- BAIK JI-HOON; KIM DONG-GYUN; SHIM JIMIN; LEE JIN HONG; CHOI YONG-SEOK; LEE JONG-CHAN: "Solid polymer electrolytes containing poly(ethylene glycol) and renewable cardanol moieties for all-solid-state rechargeable lithium batteries", POLYMER, ELSEVIER, AMSTERDAM, NL, vol. 99, 22 July 2016 (2016-07-22), AMSTERDAM, NL, pages 704 - 712, XP029688994, ISSN: 0032-3861, DOI: 10.1016/j.polymer.2016.07.058

## Description

### TECHNICAL FIELD

The present disclosure relates to a positive electrode material for a lithium-sulfur battery and a lithium-sulfur battery including the same.

The present application claims priority to Korean Patent Application No. 10-2022-0110405 filed on August 31, 2022 in the Republic of Korea.

### BACKGROUND ART

A lithium-sulfur battery is a battery system using a sulfur-based material having a sulfur-sulfur (S-S) bond as a positive electrode active material and lithium metal as a negative electrode active material. Sulfur as a main ingredient of the positive electrode active material is advantageous in that it is rich in resources all over the world, has no toxicity and shows a low atomic weight.

As the spectrum of application of secondary batteries is extended to electric vehicles (EVs), energy storage systems (ESSs), or the like, the technology of lithium-sulfur batteries capable of realizing a theoretically higher energy storage density per weight (~2,500 Wh/kg), as compared to lithium-ion secondary batteries having a relatively lower energy storage density per weight (~250 Wh/kg), has been spotlighted.

In the lithium-sulfur battery, during discharge, while lithium as a negative electrode active material donates an electron and is ionized and oxidized into a lithium cation, a sulfur-based material as a positive electrode active material accepts the electron and is reduced. Herein, the S-S bond accepts two electrons through the reduction of the sulfur-based material and is converted into a sulfur anion form. The lithium cation produced by the oxidation of lithium is transferred to a positive electrode through an electrolyte, and is bound with the sulfur anion produced by the reduction of the sulfur-based compound to form a salt. Particularly, sulfur before discharge has a cyclic S₈ structure, which is converted into lithium polysulfide (Li₂Sₓ) through the reduction and is reduced completely to produce lithium sulfide (Li₂S).

As such, since sulfur used for the positive electrode active material is an insulator, there are problems to be solved in that electrons produced through the electrochemical reactions are hard to be transported, and the capacity of a battery is decreased rapidly due to the elution of lithium polysulfide (Li₂Sₓ) generated during charge/discharge cycles, or the like.

For example, lithium polysulfide is formed while sulfur used in the positive electrode is reduced during discharge, and the formed lithium polysulfide is dissolved in an ether-based liquid electrolyte and eluted from the positive electrode. The eluted lithium polysulfide passes through the separator and arrives at the negative electrode to cause side reactions with lithium metal, thereby forming an unstable interface. This causes the loss of sulfur as a positive electrode active material, and such a series of processes is called 'shuttle effect'. Patent document EP2927996B1 discloses an amphiphilic polymer covering a sulfur-carbon composite.

Under these circumstances, there is a need for a technology of inhibiting the loss of the energy density of a battery, caused by such a shuttle effect.

### DISCLOSURE

### Technical Problem

The present disclosure is designed to solve the problems of the related art, and therefore the present disclosure is directed to providing a sulfur-carbon composite totally or partially surface-coated with a polymer in order to inhibit the elution of lithium polysulfide from the positive electrode of a lithium-sulfur battery, and a method for preparing the sulfur-carbon composite.

Particularly, the present disclosure is directed to providing a lithium-sulfur battery which is inhibited from the shuttle effect by the coating structure of the sulfur-carbon composite and has excellent discharge capacity and capacity retention by inhibiting the volumetric swelling of the positive electrode.

### Technical Solution

In one aspect of the present disclosure, there is provided a sulfur-carbon composite according to any one of the following embodiments.

According to the first embodiment of the present disclosure, there is provided a sulfur-carbon composite which includes:
a porous carbonaceous matrix; and a sulfur-containing compound contained in at least one of the outer surface of the porous carbonaceous matrix and the inner surfaces of the pores of the porous carbonaceous matrix, and
is totally or partially surface-coated with a crosslinked product of an amphiphilic cardanol derivative represented by the following Chemical Formula 1: 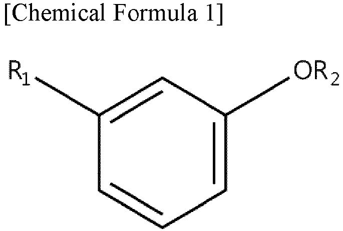
wherein R₁ represents at least one selected from a C10-C50 alkyl group, a C10-C50 alkenyl group and a C10-C50 alkynyl group; and
R₂ represents at least one selected from a C1-C10 alkyl group, a C2-C10 alkenyl group and a C2-C10 alkynyl group, and has a structure substituted with at least one anionic functional group.

According to the second embodiment of the present disclosure, there is provided the sulfur-carbon composite as defined in the first embodiment, wherein the surface of the sulfur-carbon composite may show a zeta (ζ) potential satisfying the following Formula 1:$- 60 mV \leq ζ \leq 0 mV$

According to the third embodiment of the present disclosure, there is provided the sulfur-carbon composite as defined in the first or the second embodiment, wherein at least one of R₁ and R₂ in the amphiphilic cardanol derivative may have a structure containing at least one unsaturated bond between carbon atoms.

According to the fourth embodiment of the present disclosure, there is provided the sulfur-carbon composite as defined in any one of the first to the third embodiments, wherein R₂ may represent -(CHₓ)ₙQ (wherein x = 0, 1 or 2, n is an integer of 1-10, and Q is an anionic functional group).

According to the fifth embodiment of the present disclosure, there is provided the sulfur-carbon composite as defined in any one of the first to the fourth embodiments, wherein the anionic functional group may include at least one functional group selected from -O⁻, - SO₃⁻, -COO⁻, -SO₄²⁻ and a conjugate acid thereof.

According to the sixth embodiment of the present disclosure, there is provided the sulfur-carbon composite as defined in any one of the first to the fifth embodiments, wherein the anionic functional group contained in R₂ may further include at least one of alkali metal ions and alkaline earth metal ions, as a cation.

According to the seventh embodiment of the present disclosure, there is provided the sulfur-carbon composite as defined in any one of the first to the sixth embodiments, wherein the crosslinked product of an amphiphilic cardanol derivative may have a crosslinking degree of 15-45% as determined by the following Formula 2: 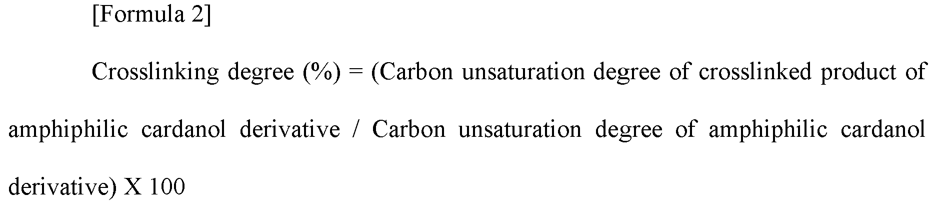 Crosslinking degree (%) = (Carbon unsaturation degree of crosslinked product of amphiphilic cardanol derivative / Carbon unsaturation degree of amphiphilic cardanol derivative) X 100

According to the eighth embodiment of the present disclosure, there is provided the sulfur-carbon composite as defined in any one of the first to the seventh embodiments, wherein R₁ in the amphiphilic cardanol derivative may have at least one structure selected from the following Chemical Formula 2 to Chemical Formula 5:

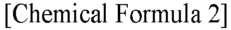

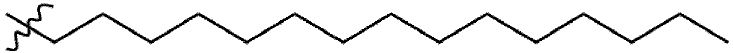

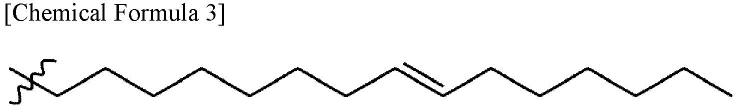

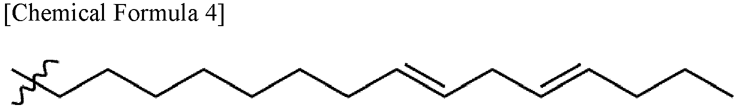

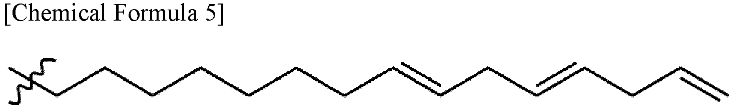

According to the ninth embodiment of the present disclosure, there is provided the sulfur-carbon composite as defined in any one of the first to the eighth embodiments, wherein the amphiphilic cardanol derivative may include 1-10 parts by weight of the structure in which R₁ represents Chemical Formula 2, 40-70 parts by weight of the structure in which R₁ represents Chemical Formula 3, 5-25 parts by weight of the structure in which R₁ represents Chemical Formula 4, and 25-40 parts by weight of the structure in which R₁ represents Chemical Formula 5.

According to the tenth embodiment of the present disclosure, there is provided the sulfur-carbon composite as defined in any one of the first to the ninth embodiments, wherein the porous carbonaceous matrix may include carbon black, carbon fibers, carbon nanotubes (CNTs), graphene, graphene oxide (GO), reduced graphene oxide (rGO), graphite, graphite nanofibers (GNFs), carbon nanofibers (CNFs), activated carbon fibers (ACFs), natural graphite, artificial graphite, expandable graphite, activated carbon, fullerene, or two or more materials of them.

According to the eleventh embodiment of the present disclosure, there is provided the sulfur-carbon composite as defined in any one of the first to the tenth embodiments, wherein the sulfur-containing compound may include inorganic sulfur (S₈), lithium sulfide (Li₂S), lithium polysulfide (Li₂Sₓ, 2 ≤ x ≤ 8), a disulfide compound, or a mixture of two or more of them.

According to the twelfth embodiment of the present disclosure, there is provided the sulfur-carbon composite as defined in any one of the first to the eleventh embodiments, wherein the total content of the crosslinked product of an amphiphilic cardanol derivative may be 0.1-10 wt% based on the total weight of the sulfur-carbon composite.

According to the thirteenth embodiment of the present disclosure, there is provided the sulfur-carbon composite as defined in any one of the first to the twelfth embodiments, wherein the total content of the crosslinked product of an amphiphilic cardanol derivative may be 0.1-1 wt% based on the total weight of the sulfur-carbon composite.

In another aspect of the present disclosure, there is provided a method for preparing a sulfur-carbon composite according to any one of the following embodiments.

According to the fourteenth embodiment of the present disclosure, there is provided a method for preparing a sulfur-carbon composite, including the steps of:
preparing a non-coated sulfur-carbon composite including: a porous carbonaceous matrix; and a sulfur-containing compound supported in at least one of the outer surface of the porous carbonaceous matrix and the inner surfaces of the pores of the porous carbonaceous matrix;
coating the surface of the non-coated sulfur-carbon composite totally or at least partially with an amphiphilic cardanol derivative; and
carrying out crosslinking of at least a part of the coated amphiphilic cardanol derivative to obtain a sulfur-carbon composite totally or partially surface-coated with a crosslinked product of the amphiphilic cardanol derivative,
wherein the amphiphilic cardanol derivative is represented by the following Chemical Formula 1: 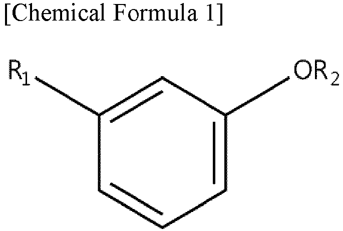
wherein R₁ represents at least one selected from a C10-C50 alkyl group, a C10-C50 alkenyl group and a C10-C50 alkynyl group; and
R₂ represents at least one selected from a C1-C10 alkyl group, a C2-C10 alkenyl group and a C2-C10 alkynyl group, and has a structure substituted with at least one anionic functional group.

According to the fifteenth embodiment of the present disclosure, there is provided the method for preparing a sulfur-carbon composite as defined in the fourteenth embodiment, which may further include a step of preparing the amphiphilic cardanol derivative through the alkylation of a cardanol derivative represented by the following Chemical Formula 6: 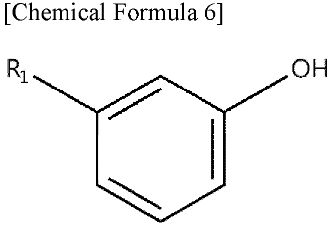 wherein R₁ represents at least one selected from a C10-C50 alkyl group, a C10-C50 alkenyl group and a C10-C50 alkynyl group.

In still another aspect of the present disclosure, there is provided a positive electrode for a lithium-sulfur battery according to the following embodiment.

According to the sixteenth embodiment of the present disclosure, there is provided a positive electrode for a lithium-sulfur battery, including: the sulfur-carbon composite as defined in any one of the first to the thirteenth embodiments; and a binder polymer.

In yet another aspect of the present disclosure, there is provided a lithium-sulfur battery according to the following embodiment.

According to the seventeenth embodiment of the present disclosure, there is provided a lithium-sulfur battery including a positive electrode, a negative electrode, a separator interposed between the positive electrode and the negative electrode, and an electrolyte, wherein the positive electrode includes the positive electrode as defined in the sixteenth embodiment.

### Advantageous Effects

The sulfur-carbon composite according to the present disclosure has a coating structure derived from a crosslinked product of an amphiphilic cardanol derivative, and thus can provide an effect of inhibiting the elution of lithium polysulfide during the operation of a lithium-sulfur battery including a positive electrode using the same. In this manner, it is possible to provide a lithium-sulfur battery with not only improved discharge capacity but also excellent battery capacity retention after repeating cycles.

In addition, it is possible to reduce the problem of the swelling of a positive electrode during the operation of a lithium-sulfur battery and to provide the lithium-sulfur battery with improved safety, by virtue of the coating structure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 shows the spectrum of ¹H NMR (nuclear magnetic resonance spectrometry) result of cardanol used for preparing Preparation Examples 1 and 2.
FIG. 2 shows the spectrum of ¹H NMR result of the amphiphilic cardanol derivative prepared according to Preparation Example 1.
FIG. 3 shows the partially extracted spectrum of ¹H NMR result of the crosslinked product of the amphiphilic cardanol derivative formed according to Example 1.
FIG. 4 shows the graph of thermogravimetric analysis (TGA) of the porous carbonaceous matrix (KB) used for preparing Comparative Example 1, Comparative Example 1 (KB/S), Example 1 (c-CPS-KB/S 0.5 wt%), Example 2 (c-CPS-Li-KB/S 0.5 wt%), Example 3 (c-CPS-KB/S 1 wt%), Example 4 (c-CPS-KB/S 2 wt%) and Example 5 (c-CPS-KB/S 3 wt%).
FIG. 5 shows the scanning electron microscopic (SEM) images of Comparative Example 1 (KB/S), Example 1 (c-CPS-KB/S 0.5 wt%), Example 2 (c-CPS-Li-KB/S 0.5 wt%), Example 3 (c-CPS-KB/S 1 wt%), Example 4 (c-CPS-KB/S 2 wt%) and Example 5 (c-CPS-KB/S 3 wt%).
FIG. 6 is a graph illustrating the results of the cycle test of the lithium-sulfur coin cells using Comparative Example 1 and Examples 1, 3, 4 and 5.
FIG. 7 is a graph illustrating the results of the cycle test of the lithium-sulfur coin cells using Comparative Example 1 and Examples 1 and 2.

### BEST MODE

Hereinafter, preferred embodiments of the present disclosure will be described in detail. However, the description proposed herein is just a preferable example for the purpose of illustrations only, not intended to limit the scope of the disclosure, and each constitutional element may be modified diversely or may be combined optionally.

Throughout the specification, the expression 'a part includes or comprises an element' does not preclude the presence of any additional elements but means that the part may further include the other elements.

Specific terms used in the following description are for illustrative purposes and are not limiting. The term, such as 'top', 'bottom', 'left', 'right', 'front', 'rear', 'internal' or 'external' showing a direction indicates the direction in the drawings to which it is referred, or indicates the direction toward the geometrical center of the corresponding apparatus, system and members thereof, or the direction away from the same. In addition to the terms themselves, the terms include words including them, derivatives thereof, and words of similar meanings.

As used herein, each of the terms 'alkyl group', 'alkenyl group' and 'alkynyl group' independently represents a linear or branched chain and refers to a substituted or non-substituted hydrocarbon.

The term 'substituted or non-substituted' means that the alkyl group is substituted with at least one substituent selected from the group consisting of: deuterium; a halogen group; a nitrile group; a nitro group; a hydroxyl group; -COOH; an alkoxy group; an alkyl group; a cycloalkyl group; an alkenyl group; a cyclolakenyl group; an aryl group; a heterocyclic group containing at least one of N, O, S and P atoms; and a heteroaryl group, or has no substituent.

In one aspect of the present disclosure, there is provided a sulfur-carbon composite which can be used as a positive electrode material of a lithium-sulfur secondary battery.

The sulfur-carbon composite includes: a porous carbonaceous matrix; and a sulfur-containing compound contained in at least one of the outer surface of the porous carbonaceous matrix and the inner surfaces of the pores of the porous carbonaceous matrix, and is totally or partially surface-coated with a crosslinked product of an amphiphilic cardanol derivative represented by Chemical Formula 1.

As used herein, the term 'amphiphilic' refers to a characteristic including both a non-polar hydrophobic moiety and a polar hydrophilic moiety. For example, an amphiphilic compound refers to a compound having a structure including both a non-polar hydrophobic moiety and a polar hydrophilic moiety. As such, 'amphiphilic cardanol derivative' refers to a cardanol derivative having a structure including both a non-polar hydrophobic moiety and a polar hydrophilic moiety.

As used herein, the term 'derivative' refers to a compound obtained through a partial chemical change of a compound and having a similar structure. In general, such a derivative refers to a compound in which a hydrogen atom or a specific atom group is substituted with another atom or atom group. In a broad sense, a product formed through an addition reaction, or the like, may be referred to as a derivative. Therefore, the term 'cardanol derivative' not only means cardanol itself but also generally covers a compound having a structure similar to the structure of cardanol through a chemical change of cardanol.

Herein, 'cardanol' is one of the derivatives obtained from cashew nutshell liquid (CNSL), a natural vegetable oil extracted from the epidermis of cashew fruits belonging to the lacquer family that lives in tropical forests, and may be represented by the following structural formula: 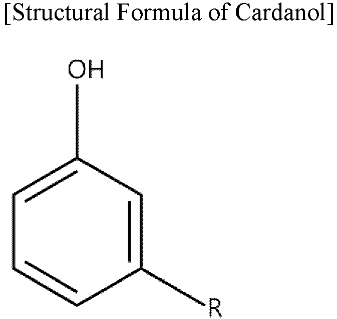 R = C₁₅H₃₁₋₂ₙ (wherein n = 0, 1, 2 or 3).

As used herein, the term 'amphiphilic cardanol derivative' generally refers to a compound having a structure similar to the structure of cardanol and modified in such a manner that it may include both a non-polar hydrophobic moiety and a polar hydrophilic moiety in its structure. Herein, 'modification' generally refers to a chemical reaction of partial or total substitution of the structure of a compound to induce a change in chemical properties.

Particularly, according to the present disclosure, the amphiphilic cardanol derivative is represented by the following Chemical Formula 1: 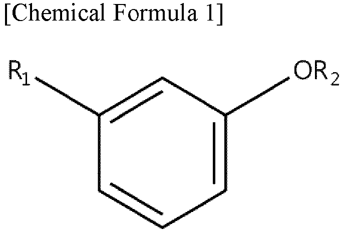
wherein R₁ represents at least one selected from a C10-C50 alkyl group, a C10-C50 alkenyl group and a C10-C50 alkynyl group; and
R₂ represents at least one selected from a C1-C10 alkyl group, a C2-C10 alkenyl group and a C2-C10 alkynyl group, and has a structure substituted with at least one anionic functional group.

The compound represented by Chemical Formula 1 is a phenol derivative substituted with R₁ at the meta position and is one of the cardanol derivatives. The compound represented by Chemical Formula 1 includes the substituent (R₁) having 10-50 carbon atoms, and thus includes a nonpolar hydrophobic moiety. In addition, the compound represented by Chemical Formula 1 includes the substituent (R₂) having 1-10 carbon atoms and at least one anionic functional group, and thus includes a hydrophilic moiety.

The compound represented by Chemical Formula 1 may form a crosslinked product by way of the addition reaction through an unsaturated bond between carbon atoms in its structure and/or condensation reaction through an alkoxy functional group.

According to an embodiment of the present disclosure, in the compound represented by Chemical Formula 1, at least one of R₁ and R₂ includes at least one unsaturated bond between carbon atoms, thereby forming a crosslinked product through the unsaturated bond between carbon atoms.

Herein, the term 'unsaturated bond between carbon atoms' refers to at least one of carbon (sp2)=carbon (sp2) double bond and carbon (sp)≡carbon (sp) triple bond. Therefore, the expression 'at least one of R₁ and R₂ includes at least one unsaturated bond between carbon atoms' means that at least one of R₁ and R₂ represents a substituted or non-substituted hydrocarbon in which the whole or a part of the bonds between carbon atoms are double bonds and/or triple bonds. The unsaturated bond between carbon atoms contained in the amphiphilic cardanol derivative may provide crosslinking site(s) in the crosslinked product of the amphiphilic cardanol derivative.

According to an embodiment of the present disclosure, as described hereinafter, the sulfur-carbon composite is totally or partially surface-coated with the crosslinked product of the amphiphilic cardanol derivative by coating the surface of the sulfur-carbon composite totally or partially with the amphiphilic cardanol derivative and carrying out crosslinking.

According to an embodiment of the present disclosure, the nonpolar moiety in which R₁ having a relatively longer carbon chain is positioned in the structure of the amphiphilic cardanol derivative may provide excellent binding force with a porous carbonaceous matrix, and the polar moiety having a relatively shorter carbon chain and including an anionic functional group positioned therein may impart hydrophilicity to the surface of the sulfur-carbon composite.

According to an embodiment of the present disclosure, the surface of the sulfur-carbon composite totally or partially surface-coated with the crosslinked product of the amphiphilic cardanol derivative may show a negative value of zeta (ζ) potential.

Particularly, the surface of the sulfur-carbon composite may show a zeta potential satisfying the following Formula 1: $- 60 mV \leq ζ \leq 0 mV$

According to the present disclosure, the zeta potential may show a measurement error depending on the instrument used for the measurement, but, for example, may show a value measured by using a zeta potential tester (ELSZ-1000, OTSUKA Electronics) after preparing a dispersion containing the sulfur-carbon composition at a concentration of 0.01 wt% in water as a solvent.

According to an embodiment of the present disclosure, the amphiphilic cardanol derivative is modified in such a manner that at least one anionic functional group is present in the structure of R₂, wherein the anionic functional group may be substituted at one end of R₂. For example, R₂ may be represented by -(CHₓ)ₙQ (wherein x =0, 1 or 2, n is an integer of 1-10, and Q is an anionic functional group).

Herein, the anionic functional group refers to a functional group capable of providing an anion in an aqueous solvent. For example, the compound containing an anionic functional group may have a property of dissociating a cation, such as proton (H⁺), so that it may provide an anion (-) in an aqueous solvent, such as water.

According to an embodiment of the present disclosure, the anionic functional group may be a functional group providing -O⁻, -SO₃⁻, -COO⁻ or -SO₄²⁻ in an aqueous solvent. Particularly, the anionic functional group may include at least one selected from -O⁻, -SO₃⁻, -COO⁻, -SO₄²⁻ and a conjugate acid thereof.

According to an embodiment of the present disclosure, the amphiphilic cardanol derivative may further include an alkali metal ion and/or an alkaline earth metal ion, as a conjugate ion of the anion, in the anionic functional group contained in its structure. Particularly, the anionic functional group contained in R₂ may further include at least one of alkali metal ions and alkaline earth metal ions as a conjugate ion. When R₂ further includes a conjugate ion of the anionic functional group, it is possible to provide an advantageous effect in terms of the electrical conductivity of a positive electrode using the sulfur-carbon composite, but the scope of the present disclosure is not limited thereto.

Particular examples of the alkali metal ion may include lithium ion (Li⁺), sodium ion (Na⁺) or potassium ion (K⁺), but are not limited thereto. Particular examples of the alkaline earth metal ion may include calcium ion (Ca²⁺), magnesium ion (Mg²⁺) or beryllium ion (Be²⁺), but are not limited thereto.

According to an embodiment of the present disclosure, the anionic functional group may be at least one selected from -SO₃⁻, -COO⁻, -SO₄²⁻, -SO₃H, -COOH, -SO₄H, -SO₃⁻M⁺, - COO⁻M⁺, -SO₄²⁻M₂⁺ and -SO₄²⁻M²⁺ (wherein M is an alkali metal ion or an alkaline earth metal ion).

According to another embodiment of the present disclosure, at least one anionic functional group contained in the structure of R₂ may include at least one of -SO₃⁻, -SO₃H and -SO₃⁻M⁺ (wherein M is an alkali metal ion).

According to an embodiment of the present disclosure, the anionic functional group contained in the amphiphilic cardanol derivative may provide an anion to the surface of the sulfur-carbon composite coated with the crosslinked product of the amphiphilic cardanol derivative. Therefore, it is possible to provide an effect of improving the electrical conductivity of the sulfur-carbon composite, but the effects of the present disclosure are not limited thereto.

As described above, the unsaturated bond between carbon atoms contained in the amphiphilic cardanol derivative provides crosslinking sites(s) in the crosslinked product of the amphiphilic cardanol derivative. Particularly, the amphiphilic cardanol derivative includes at least one unsaturated bond between carbon atoms. Therefore, the crosslinked product of the amphiphilic cardanol derivative is formed through the crosslinking between two or more amphiphilic cardanol derivative molecules and/or in one amphiphilic cardanol derivative molecule.

According to an embodiment of the present disclosure, the crosslinking between the unsaturated bonds of the amphiphilic cardanol derivative may be determined through a structural change before and after the crosslinking of the amphiphilic cardanol derivative. For example, when comparing the ¹H-NMR graphs before and after the crosslinking of the amphiphilic cardanol derivative, the crosslinking may be determined through a decrease in the peak intensity of unsaturated bonds (e.g. C=C, C≡C, etc.) and an increase in the peak intensity of saturated bonds (e.g. C-C). In addition to this, the formation of the crosslinked product of the amphiphilic cardanol derivative may be determined through a known analysis method capable of determining a change in the number of unsaturated bonds between carbon atoms.

According to an embodiment of the present disclosure, the crosslinked product of the amphiphilic cardanol derivative may have a crosslinking degree of 15-45%, particularly 20-40%, more particularly 25-35%, as determined by the following Formula 2: 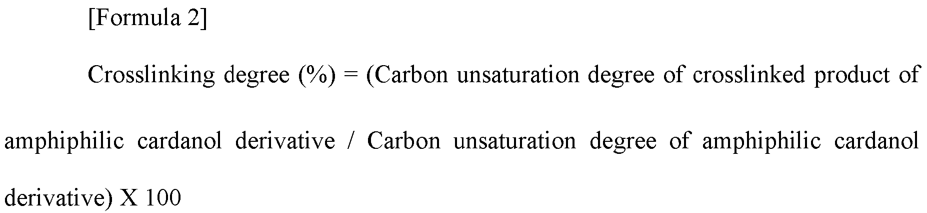 Crosslinking degree (%) = (Carbon unsaturation degree of crosslinked product of amphiphilic cardanol derivative / Carbon unsaturation degree of amphiphilic cardanol derivative) X 100

In Formula 2, the carbon unsaturation degree of each of the amphiphilic cardanol derivative and the crosslinked product of the amphiphilic cardanol derivative may be determined by a known method for determining a carbon unsaturation degree, and then the crosslinking degree may be calculated according to Formula 2.

One example of the method for determining the carbon unsaturation degree may include ¹H NMR analysis. For example, the carbon unsaturation degree may be determined by dividing the peak area of the unsaturated bonds between carbon atoms of the crosslinked product of the amphiphilic cardanol derivative by the peak area of the unsaturated bonds between carbon atoms of the amphiphilic cardanol derivative before crosslinking.

According to an embodiment of the present disclosure, ¹H NMR analysis may be carried out by a known method. For example, ¹H NMR may be carried out by using a sample dissolved in DMSO-d₆ as a solvent and 400 MHz NMR instrument.

According to an embodiment of the present disclosure, the number of carbon atoms of R₁ in Chemical Formula 1 is important in that R₁ imparts hydrophobicity to the crosslinked product of the amphiphilic cardanol derivative and improves the adhesion to a porous carbonaceous matrix.

R₁ is at least one selected from a C10-C50 alkyl group, a C10-C50 alkenyl group and a C10-C50 alkynyl group.

According to an embodiment of the present disclosure, R₁ may be particularly at least one selected from a C10-C40 alkyl group, a C10-C40 alkenyl group and a C10-C40 alkynyl group, and more particularly at least one selected from a C10-C30 alkyl group, a C10-C30 alkenyl group and a C10-C30 alkynyl group. More particularly, R₁ may be particularly at least one selected from a C13-C20 alkyl group, a C13-C20 alkenyl group and a C13-C20 alkynyl group. According to an embodiment of the present disclosure, the amphiphilic cardanol derivative may have a structure in which R₁ has 10-30 carbon atoms and the number of unsaturated bonds between carbon atoms is 0 (i.e. saturated hydrocarbon group) to 5, particularly 0 to 4, or 0 to 3.

According to another embodiment of the present disclosure, the amphiphilic cardanol derivative may include those having at least one structure selected from the following Chemical Formula 2 to Chemical Formula 5:

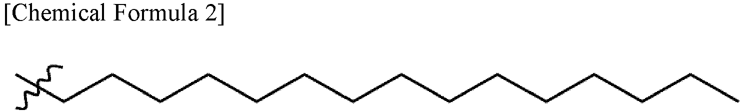

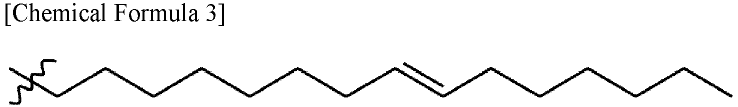

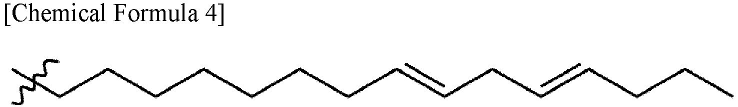

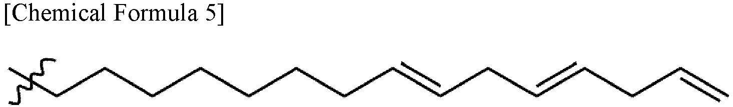

According to another embodiment of the present disclosure, the amphiphilic cardanol derivative may be a mixture of two or more derivatives different in terms of R₁. Particularly, the amphiphilic cardanol derivative may be a mixture of derivatives in which R₁ has the structures represented by Chemical Formula 2 to Chemical Formula 5.

According to still another embodiment of the present disclosure, the amphiphilic cardanol derivative may include 1-10 parts by weight of the structure in which R₁ represents Chemical Formula 2, 40-70 parts by weight of the structure in which R₁ represents Chemical Formula 3, 5-25 parts by weight of the structure in which R₁ represents Chemical Formula 4, and 25-40 parts by weight of the structure in which R₁ represents Chemical Formula 5.

Particularly, the amphiphilic cardanol derivative may include 3-7 parts by weight of the structure in which R₁ represents Chemical Formula 2, 45-60 parts by weight of the structure in which R₁ represents Chemical Formula 3, 10-20 parts by weight of the structure in which R₁ represents Chemical Formula 4, and 25-30 parts by weight of the structure in which R₁ represents Chemical Formula 5.

According to an embodiment of the present disclosure, the number of carbon atoms of R₂ in Chemical Formula 1 is important in that R₂ imparts hydrophilicity to the crosslinked product of the amphiphilic cardanol derivative and improves the electrical conductivity of the sulfur-carbon composite.

R₂ represents at least one selected from a C1-C10 alkyl group, a C2-C10 alkenyl group and a C2-C10 alkynyl group, and has a structure substituted with at least one anionic functional group at an optional position.

According to an embodiment of the present disclosure, R₂ may be particularly at least one selected from a C2-C8 alkyl group, a C2-C8 alkenyl group and a C2-C8 alkynyl group, and more particularly at least one selected from a C3-C5 alkyl group, a C3-C5 alkenyl group and a C3-C5 alkynyl group.

According to an embodiment of the present disclosure, the amphiphilic cardanol derivative may have a structure in which R₂ has 2-5 carbon atoms and has a structure substituted with an anionic functional group at the terminal thereof.

According to an embodiment of the present disclosure, R₂ may be 3-propylsulfonic acid group.

According to an embodiment of the present disclosure, the amphiphilic cardanol derivative may include cardanylpropyl sulfonic acid represented by the following Chemical Formula 7: 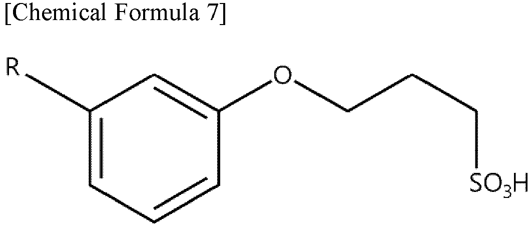 wherein R is C₁₅H₃₁₋₂ₙ (wherein n = 0, 1, 2 or 3).

According to an embodiment of the present disclosure, the structure of the sulfur-carbon composite may be divided into a coating structure formed from the crosslinked product of the amphiphilic cardanol derivative and a core structure containing a porous carbonaceous matrix and a sulfur-containing compound.

The porous carbonaceous matrix forming the core structure may function to improve the conductivity of the sulfur-carbon composite and to support the sulfur-containing compound so that the sulfur utilization efficiency may be improved, but the mechanism of the present disclosure is not limited thereto.

The porous carbonaceous matrix is a material having a large number of fine pores, and the sulfur-containing compound is supported in at least one of the outer surface of the porous carbonaceous matrix and the inner surfaces of the pores of the porous carbonaceous matrix.

According to an embodiment of the present disclosure, the porous carbonaceous matrix includes a large number of fine pores on the surface thereof and inside thereof. For example, the fine pores may have an average diameter of 5-100 nm, particularly 5-80 nm, 5-60 nm, or 5-50 nm.

The porous carbonaceous matrix is not particularly limited in its material, as long as it includes a large number of fine pores as mentioned above so that the sulfur-containing compound may be supported.

According to an embodiment of the present disclosure, particular examples of the material of the porous carbonaceous matrix include: carbon black, carbon fibers, carbon nanotubes (CNTs), graphene, graphene oxide (GO), reduced graphene oxide (rGO), graphite, graphite nanofibers (GNFs), carbon nanofibers (CNFs), activated carbon fibers (ACFs), natural graphite, artificial graphite, expandable graphite, activated carbon, fullerene, or two or more materials of them.

According to an embodiment of the present disclosure, when carbon nanotubes are used as a material of the porous carbonaceous matrix, the carbon nanotubes may include single-walled carbon nanotubes (SWCNTs), multi-walled carbon nanotubes (MWCNTs) or both.

According to another embodiment of the present disclosure, when carbon nanotubes are used as a material of the porous carbonaceous matrix, the carbon nanotubes may include entangled carbon nanotubes (entangled CNTs) formed as secondary structures by the aggregation of a plurality of carbon nanotubes as primary structures.

According to an embodiment of the present disclosure, the entangled carbon nanotubes may be characterized in that they have improved porosity as compared to the carbon nanotubes as primary structures by virtue of the interstitial volumes formed by the entanglement of the carbon nanotubes as primary structure.

According to an embodiment of the present disclosure, the porous carbonaceous matrix may have a size of 10-100 µm, particularly 20-50 µm, but is not limited thereto. When the size of the porous carbonaceous matrix falls within the above-defined range, it is possible to provide an advantageous effect in terms of controlling the solid content during the preparation of a slurry for forming an electrode active material layer, and physical properties of an electrode, such as adhesion, and performance of a battery (output, capacity, etc.)

According to an embodiment of the present disclosure, the porous carbonaceous matrix may have a pore volume of 1-5 cm³/g, particularly 1-4 cm³/g. For example, the pore volume may be a value determined by the calculation through the N₂ isotherm analysis based on adsorption of liquid nitrogen.

According to an embodiment of the present disclosure, the porous carbonaceous matrix may have a BET specific surface area of 150-2,000 m²/g, particularly 250-700 m²/g, but it not limited thereto. The BET specific surface area is determined by the BET method, and may be a value determined by a known method. For example, the BET specific surface area may be determined by using BELSORP mini II available from BEL Japan Co. from the nitrogen gas adsorption under a liquid nitrogen temperature (77K).

According to an embodiment of the present disclosure, the sulfur-containing compound may include inorganic sulfur (S₈), lithium sulfide (Li₂S), lithium polysulfide (Li₂Sₓ, 2 ≤ x ≤ 8), a disulfide compound, or a mixture of two or more of them, but is not limited thereto.

According to an embodiment of the present disclosure, the porous carbonaceous matrix and the sulfur-containing compound may be mixed at a weight ratio of 1:9-9:1, particularly 2:8-8:2, and more particularly 3:7-7:3, or 4:6-2:8.

According to an embodiment of the present disclosure, the core structure of the sulfur-carbon composite may be formed by mixing the porous carbonaceous matrix with the sulfur-containing compound, followed by heat treatment. For example, the heat treatment may be carried out at a temperature of 130-200°C, particularly 130-180°C, or 150-160°C.

As described above, in one aspect of the present disclosure, there is provided a sulfur-carbon composite which includes: a porous carbonaceous matrix; and a sulfur-containing compound contained in at least one of the outer surface of the porous carbonaceous matrix and the inner surfaces of the pores of the porous carbonaceous matrix, and is totally or partially surface-coated with a crosslinked product of an amphiphilic cardanol derivative represented by Chemical Formula 1.

According to an embodiment of the present disclosure, the sulfur-carbon composite may have an average particle size (D₅₀) of 10-100 µm, particularly 20-50 µm.

According to an embodiment of the present disclosure, the total content of the crosslinked product of an amphiphilic cardanol derivative may be 0.1-10 wt% based on the total weight of the sulfur-carbon composite, but is not limited thereto. Particularly, the total content of the crosslinked product of an amphiphilic cardanol derivative may be 0.1-5 wt%, particularly 0.1-1 wt%, 0.3-1 wt%, or 0.3-0.8 wt%, based on the total weight of the sulfur-carbon composite. When the content of the crosslinked product of an amphiphilic cardanol derivative falls within the above-defined range, it is possible to provide a more advantageous effect in terms of improvement of the life of a lithium-sulfur battery using the sulfur-carbon composite, but the scope of the present disclosure is not limited thereto.

In another aspect of the present disclosure, there is provided a method for preparing the above-described sulfur-carbon composite.

The method for preparing a sulfur-carbon composite includes the steps of: preparing a non-coated sulfur-carbon composite including: a porous carbonaceous matrix; and a sulfur-containing compound supported in at least one of the outer surface of the porous carbonaceous matrix and the inner surfaces of the pores of the porous carbonaceous matrix; coating the surface of the non-coated sulfur-carbon composite totally or at least partially with an amphiphilic cardanol derivative; and carrying out crosslinking of at least a part of the coated amphiphilic cardanol derivative to obtain a sulfur-carbon composite totally or partially surface-coated with a crosslinked product of the amphiphilic cardanol derivative.

In the method, reference will be made to be above description about the porous carbonaceous matrix, the sulfur-containing compound, the amphiphilic cardanol derivative and the crosslinked product of an amphiphilic cardanol derivative.

According to an embodiment of the present disclosure, the method for preparing a sulfur-carbon composite may further include a step of preparing the amphiphilic cardanol derivative through the alkylation of a cardanol derivative represented by the following Chemical Formula 6: 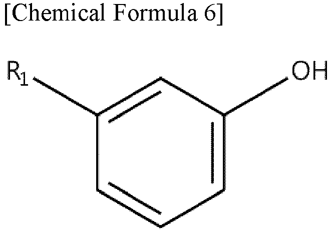 wherein R₁ represents at least one selected from a C10-C50 alkyl group, a C10-C50 alkenyl group and a C10-C50 alkynyl group.

First, the step of preparing a non-coated sulfur-carbon composite includes mixing the porous carbonaceous matrix with the sulfur-containing compound. According to an embodiment of the present disclosure, the porous carbonaceous matrix and the sulfur-containing compound may be mixed at a weight ratio of 1:9-9:1, particularly 2:8-8:2, and more particularly 3:7-7:3, or 4:6-2:8.

According to an embodiment of the present disclosure, the method may further include a step of pulverizing the resultant mixture of the porous carbonaceous matrix with the sulfur-containing compound, after mixing them. It is possible to improve the mixing homogeneity of the porous carbonaceous matrix and the sulfur-containing compound through the pulverization, but the scope of the present disclosure is not limited thereto.

According to an embodiment of the present disclosure, the step of preparing a non-coated sulfur-carbon composite includes, after mixing (or mixing and pulverizing) the porous carbonaceous matrix with the sulfur-containing compound, a step of carrying out heat treatment. For example, the heat treatment may be carried out at a temperature of 130-200°C, particularly 130-180°C, or 150-160°C. It is possible to improve the mechanical strength of the resultant sulfur-carbon composite through the heat treatment, but the scope of the present disclosure is not limited thereto.

Next, the surface of the non-coated sulfur-carbon composite is coated totally or at least partially with an amphiphilic cardanol derivative.

According to an embodiment of the present disclosure, the coating may be carried out by allowing the sulfur-carbon composite to be in contact with the amphiphilic cardanol derivative. For example, the surface of the sulfur-carbon composite may be coated by dipping the sulfur-carbon composite in a dispersion containing the amphiphilic cardanol derivative dispersed therein and carrying out stirring.

According to an embodiment of the present disclosure, the dispersion containing the amphiphilic cardanol derivative dispersed therein may include the amphiphilic cardanol derivative dispersed in an aqueous solvent, such as water, at a concentration of 0.1-10 wt%, but the scope of the present disclosure is not limited thereto.

According to an embodiment of the present disclosure, the content of the coated amphiphilic cardanol derivative may be 0.1-10 wt%, 0.1-5 wt%, 0.1-3 wt%, 0.1-1 wt%, or 0.3-0.8 wt%, based on the total weight of the sulfur-carbon composite. The content of the coated amphiphilic cardanol derivative may be calculated from an increment of weight of the coated sulfur-carbon composite as compared to the non-coated sulfur-carbon composite.

Then, crosslinking is carried out to form a crosslinked product through the unsaturated bonds between carbon atoms in the coated amphiphilic cardanol derivative. The surface of the sulfur-carbon composite is totally or partially coated with the crosslinked product of an amphiphilic cardanol derivative through the crosslinking.

According to an embodiment of the present disclosure, the crosslinking may be carried out in the presence of a polymerization initiator. For example, the polymerization initiator may be an azo-based initiator and may be commercially available from V-501 (CAS RN® 2638-94-0, C₁₂H₁₆N₄O₄, MW 280.28 g/mol, Fuji Film Wako Pure Chemical Corp.), but is not limited thereto.

According to an embodiment of the present disclosure, the crosslinking may be carried out preferably at a temperature where the amphiphilic cardanol derivative is not decomposed. For example, the crosslinking may be carried out at 60-100°C, 70-95°C, 80-95°C, or 90-95°C, but is not limited thereto.

According to an embodiment of the present disclosure, the method for preparing a sulfur-carbon composite may further include a step of preparing an amphiphilic cardanol derivative to be used in the step of coating the non-coated sulfur-carbon composite.

According to an embodiment of the present disclosure, the amphiphilic cardanol derivative may be prepared through the alkylation of a cardanol derivative represented by the following Chemical Formula 6: 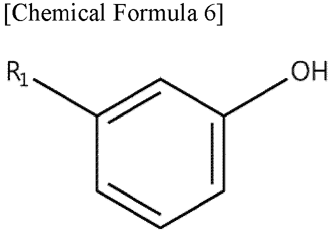 wherein R₁ represents at least one selected from a C10-C50 alkyl group, a C10-C50 alkenyl group and a C10-C50 alkynyl group.

According to an embodiment of the present disclosure, reference will be made to the above description of R₁ in Chemical Formula 1 about R₁ in Chemical Formula 6.

According to an embodiment of the present disclosure, the alkylation of the cardanol derivative represented by Chemical Formula 6 is a reaction of substituting the hydrogen atom of the hydroxyl group (OH) in Chemical Formula 6 with R₂. Herein, reference will be made to the above description of R₂ in Chemical Formula 1 about R₂ in Chemical Formula 6.

According to an embodiment of the present disclosure, the alkylation of the cardanol derivative represented by Chemical Formula 6 may be carried out by substituting the hydrogen atom of the hydroxyl group of the cardanol derivative represented by Chemical Formula 6 with at least one selected from a C1-C10 alkyl group, a C2-C10 alkenyl group and a C2-C10 alkynyl group, and then substituting at least one hydrogen atom of the resultant substituted structure with an anionic functional group to accomplish amphiphilic modification.

According to an embodiment of the present disclosure, the amphiphilic modification step may be carried out by performing the alkylation of the cardanol derivative, substituting the resultant alkyl-substituted structure with at least one functional group selected from a sulfonic acid group, a carboxylic acid group and a sulfuric acid group, and then substituting the proton (H⁺) of the acid compound with an alkali metal ion and/or an alkaline earth metal ion.

According to an embodiment of the present disclosure, the alkylation may be carried out through the ring opening rection of an alkyl sultone. Herein, the cardanol derivative alkylated through the ring opening reaction of an alkyl sultone may include a sulfonic acid group as an anionic functional group.

In this manner, it is possible to obtain a sulfur-carbon composite which includes: a porous carbonaceous matrix; and a sulfur-containing compound contained in at least one of the outer surface of the porous carbonaceous matrix and the inner surfaces of the pores of the porous carbonaceous matrix, and is totally or partially surface-coated with a crosslinked product of an amphiphilic cardanol derivative represented by Chemical Formula 1.

In still another aspect of the present disclosure, there is provided a positive electrode for a lithium-sulfur battery including the above-described sulfur-carbon composite and a binder polymer.

According to an embodiment of the present disclosure, the binder polymer may be used with no particular limitation, as long as it is a binder that may be used for a positive electrode of a lithium-sulfur battery. For example, the binder may include polyvinylidene fluoride (PVDF), particularly PVDF dispersed in N-methyl-2-pyrrolidone (NMP), but is not limited thereto.

According to another embodiment of the present disclosure, the binder polymer may include an aqueous binder, such as styrene butadiene rubber (SBR), particularly an aqueous binder dispersed in an aqueous solvent, such as water, but is not limited thereto.

According to another embodiment of the present disclosure, the positive electrode for a lithium-sulfur battery may further include, besides the binder, a conductive material, an additive, or the like. Herein, any conventional types of conductive material and additive may be used, and thus detailed description thereof will be omitted.

According to still another embodiment of the present disclosure, the positive electrode for a lithium-sulfur battery may include a positive electrode current collector, and a positive electrode active material layer coated on one surface or both surfaces of the positive electrode current collector and including the sulfur-carbon composite in combination with the binder polymer.

Herein, the positive electrode current collector is not particularly limited, as long as it has high conductivity, while not causing any chemical change in the corresponding battery.

According to an embodiment of the present disclosure, the positive electrode including the sulfur-carbon composite shows excellent effects in terms of initial capacity and cycle stability, but the effects of the present disclosure are not limited thereto.

In yet another aspect of the present disclosure, there is provided a lithium-sulfur battery including a positive electrode, a negative electrode, a separator interposed between the positive electrode and the negative electrode and an electrolyte, wherein the positive electrode includes the above-described positive electrode.

According to an embodiment of the present disclosure, the negative electrode and the separator are not particularly limited, as long as they may be used for a lithium-sulfur battery without detracting from the objects of the present disclosure. For example, the negative electrode may include lithium metal.

According to an embodiment of the present disclosure, the separator is not particularly limited, as long as it may be used as a separator of a lithium-sulfur battery. For example, the separator may include a porous polyolefin substrate, and if necessary, may further include inorganic particles on at least one surface of the porous polyolefin substrate. In addition, the separator may further include a binder for binding the inorganic particles, if necessary.

According to another embodiment of the present disclosure, the separator may be a film-shaped electrolyte membrane including a solid electrolyte, and if necessary, may further include a binder for binding the solid electrolyte. The solid electrolyte is not particularly limited, as long as it may be used conventionally for a lithium-sulfur battery. Particular examples of the solid electrolyte may include a polymeric solid electrolyte, an inorganic solid electrolyte or a combination thereof.

According to an embodiment of the present disclosure, the electrolyte includes those commonly used in a lithium sulfur battery. The electrolyte may include a lithium salt and a non-aqueous solvent.

According to an embodiment of the present disclosure, the lithium salt is not particularly limited, as long as it may be used conventionally for an electrolyte of a lithium-sulfur battery. Particular examples of the lithium salt may include, but are not limited to: LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborate, lithium lower aliphatic carboxylate, lithium tetraphenylborate, lithium imide, or two or more of them.

The nonaqueous solvent is not particularly limited, as long as it may be used conventionally for an electrolyte of a lithium-sulfur battery. Particular examples of the nonaqueous solvent may include, but are not limited to: cyclic carbonate solvents, linear carbonate solvents, ester solvents, ketone solvents, or mixed solvents containing two or more of them.

According to an embodiment of the present disclosure, the electrolyte may include (CF₃SO₂)₂NLi as a lithium salt, and a binary solvent of dioxolane (DOL)/dimethoxyethane (DME) as a nonaqueous solvent. For example, the electrolyte may further include a conventional additive, such as LiNO₃.

According to an embodiment of the present disclosure, the outer shape of the lithium-sulfur battery may be selected from a coin-like shape, a cylindrical shape, a pouch-like shape or a prismatic shape with no particular limitation. In addition, the lithium-sulfur battery may be used not only for a battery cell used as a power source of a compact device but also for a unit cell in a middle- or large-scale battery module including a plurality of battery cells, and the application thereof is not particularly limited.

According to an embodiment of the present disclosure, the lithium-sulfur battery using the positive electrode including the sulfur-carbon composite inhibits the elution of lithium polysulfide during the operation of the battery to reduce the shuttle effect, and thus can effectively improve the problem of degradation of capacity caused by the repetition of cycles, but the effects of the present disclosure are not limited thereto.

According to an embodiment of the present disclosure, the lithium-sulfur battery can provide an effect of improving the energy density by increasing the sulfur loading amount in the positive electrode, but the effects of the present disclosure are not limited thereto.

### MODE FOR DISCLOSURE

Hereinafter, the method for preparing a sulfur-carbon composite according to an embodiment of the present disclosure and the method for manufacturing a lithium-sulfur battery using the same will be explained in more detail with reference to Examples. However, the following Examples are for illustrative purposes only, and the scope of the present disclosure is not limited thereto.

### [Preparation of Amphiphilic Cardanol Derivative]

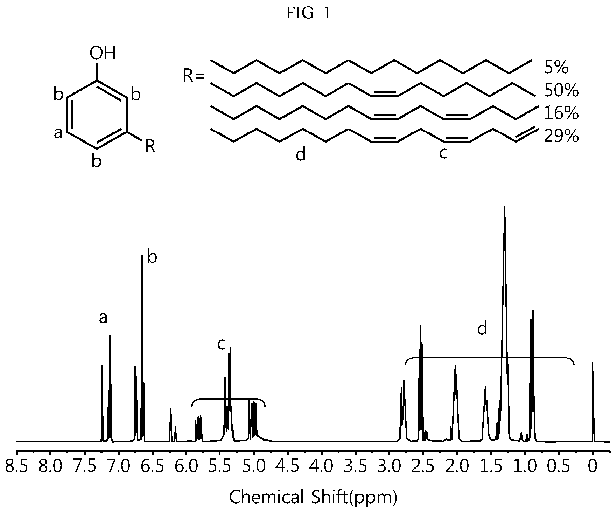

An amphiphilic cardanol derivative was prepared by using cardanol having the structure as depicted below. FIG. 1 shows the result of ¹H NMR analysis of the cardanol used herein. In the following structure, a to d represent the signs corresponding to the peaks of ¹H NMR as shown in FIG. 1.

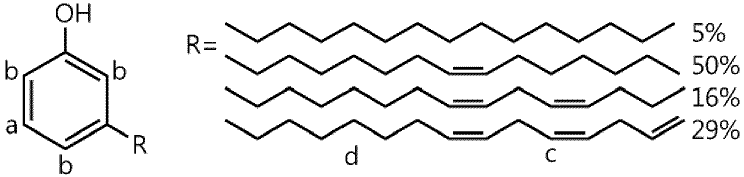

### Preparation Example 1. Preparation of Cardanylpropyl Sulfonic Acid (CPS)

Cardanylpropyl sulfonic acid as an amphiphilic cardanol derivative was prepared as follows according to the reaction scheme as depicted below.

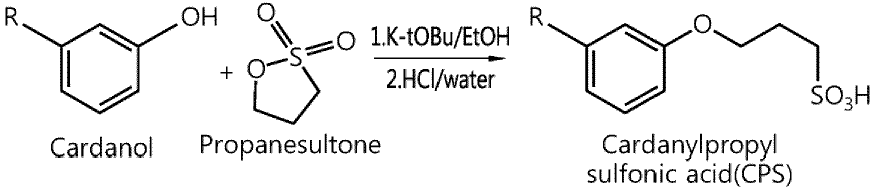

First, 3 g of cardanol and 2.24 g of potassium tert-butoxide (Sigma Aldrich) were stirred in ethanol (Daejung Co.) as a solvent at room temperature (23°C) to activate the hydroxyl group (-OH).

Propane sultone (TCI Co.) dissolved in ethanol was added to the activated cardanol monomer, and reaction was carried out at 80°C for 40 hours to obtain cardanylpropyl sulfonate.

Cardanylpropyl sulfonate was dissolved in water, an equivalent amount or more of HCl (Daejung Co.) was introduced thereto, and the resultant mixture was stirred at room temperature to perform protonation, thereby providing cardanylpropyl sulfonic acid (CPS) (yield 50%).

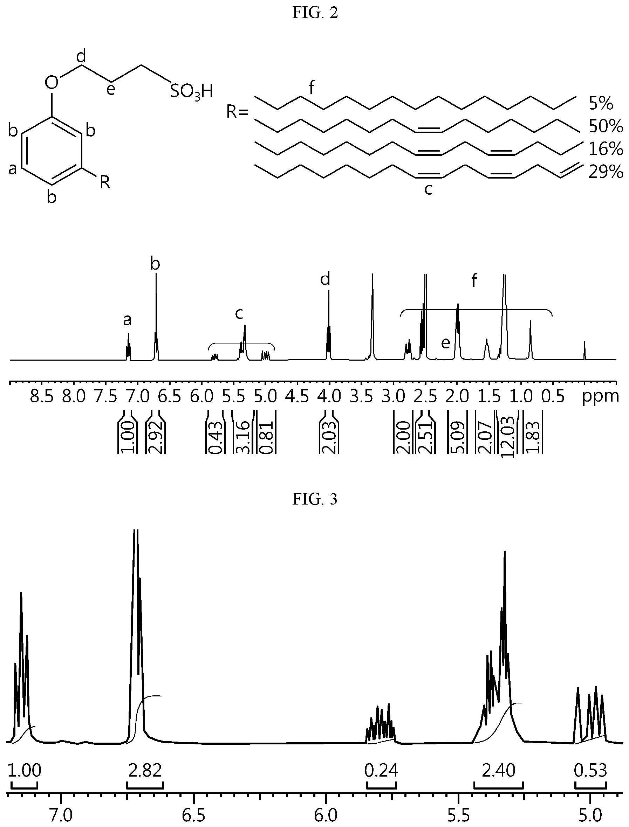

Then, ¹H NMR was carried out to determine whether cardanylpropyl sulfonic acid was obtained or not. FIG. 2 shows the result of the ¹H NMR analysis.

### Preparation Example 2. Preparation of Cardanylpropyl Lithium Sulfonate (CPS-Li)

The product of Preparation Example 1 (cardanylpropyl sulfonic acid, CPS) and LiOH were dissolved in water at equivalent amounts and stirred to obtain cardanylpropyl lithium sulfonate (CPS-Li).

### [Preparation of Sulfur-Carbon Composite]

The sulfur-carbon composite according to each of Comparative Example 1 and Examples 1-5 was obtained as follows.

### Comparative Example 1. KB-S

Sulfur (S₈) was mixed with ketjen black (KB) (Lion Corp.) at a weight ratio of 7:3, the resultant mixture was pulverized by using a mortar grinder and heat treated at 155°C for 30 minutes to obtain a non-coated sulfur-carbon composite (KB-S) including sulfur supported on the external surface of ketjen black and internal surfaces of the pores of ketjen black.

### Example 1. c-CPS-KB/S 0.5 wt%

First, 100 parts by weight of the non-coated sulfur-carbon composite prepared according to Comparative Example 1 and 0.5 parts by weight of Preparation Example 1 (cardanylpropyl sulfonic acid, CPS) as an amphiphilic cardanol derivative were introduced to 300 mL of water, sonication was carried out for 5 hours, and the resultant mixture was stirred for 16 hours and washed with water to carry out coating of the surface of the non-coated sulfur-carbon composite with the amphiphilic cardanol derivative according to Preparation Example 1.

Next, 10 wt% of a polymerization initiator (V-501, Fuji Film Wako Pure Chemical Corp.) based on the total weight of the sulfur-carbon composite coated with the amphiphilic cardanol derivative was stirred at 90°C for 24 hours together with 2 mL of water, followed by washing, to obtain a sulfur-carbon composite coated with a crosslinked product of the amphiphilic cardanol derivative.

FIG. 3 shows the peak zones of the crosslinked product of the amphiphilic cardanol derivative from the result of ¹H NMR analysis of the resultant sulfur-carbon composite. Referring to FIG. 3, it can be seen from a decrease in ¹H peak of unsaturated carbon atoms determined in the result (FIG. 2) of ¹H NMR analysis of the amphiphilic cardanol derivative that the crosslinked product is formed through the unsaturated bonds between carbon atoms.

Particularly, referring to FIG. 2 and FIG. 3, it can be seen that the crosslinking degree is 30% from the ratio of the content of unsaturated bonds of the crosslinked product of the amphiphilic cardanol derivative after crosslinking based on the content of unsaturated bonds of the amphiphilic cardanol derivative before crosslinking. 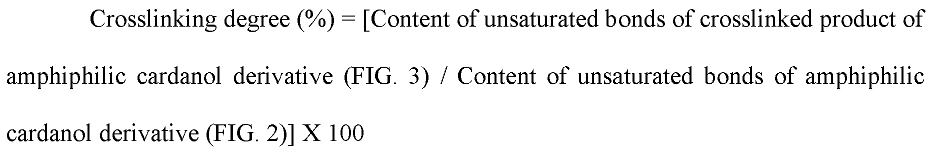 Crosslinking degree (%) = [Content of unsaturated bonds of crosslinked product of amphiphilic cardanol derivative (FIG. 3) / Content of unsaturated bonds of amphiphilic cardanol derivative (FIG. 2)] X 100

### Example 2. c-CPS-Li-KB/S 0.5 wt%

A sulfur-carbon composite was obtained in the same manner as Example 1, except that Preparation Example 2 was used as an amphiphilic cardanol derivative.

### Example 3. c-CPS-KB/S 1 wt%

A sulfur-carbon composite was obtained in the same manner as Example 1, except that Preparation Example 1 was used as an amphiphilic cardanol derivative in an amount of 1 parts by weight.

### Example 4. c-CPS-KB/S 2 wt%

A sulfur-carbon composite was obtained in the same manner as Example 1, except that Preparation Example 1 was used as an amphiphilic cardanol derivative in an amount of 2 parts by weight.

### Example 5. c-CPS-KB/S 3 wt%

A sulfur-carbon composite was obtained in the same manner as Example 1, except that Preparation Example 1 was used as an amphiphilic cardanol derivative in an amount of 3 parts by weight.

### Compositional Analysis of Sulfur-Carbon Composite

The composition of each sulfur-carbon composite prepared as described above is shown in the following Table 1.

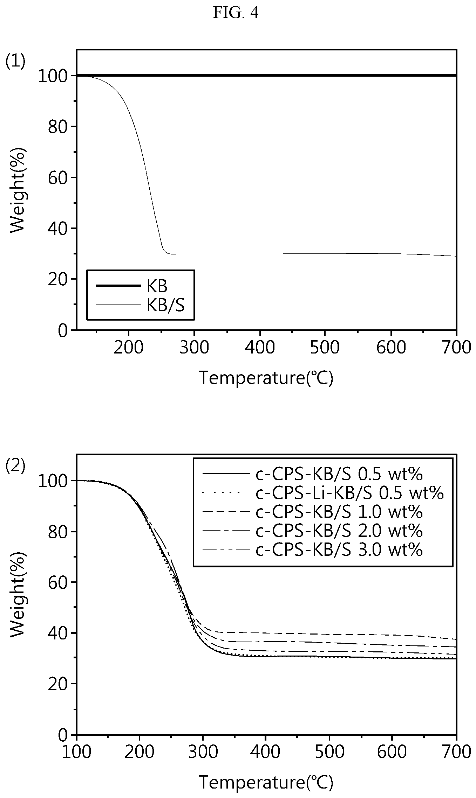

The content of sulfur in the resultant sulfur-carbon composite was determined by using thermogravimetric analysis (TGA) instrument (TA instruments TGA55) under an isothermal condition of 100°C for 10 minutes and then under heating from a temperature of 100°C to 700°C with a ramp at a rate of 10°C/min. The result is shown in FIG. 4.

**[Table 1]**

| Composition of sulfur-carbon composite | Comp. Ex. 1 | Ex. 1 | Ex. 2 | Ex. 3 | Ex. 4 | Ex. 5 |
|---|---|---|---|---|---|---|
| Cardanol derivative | | Prep. Ex. 1 | Prep. Ex. 2 | Prep. Ex. 1 | Prep. Ex. 1 | Prep. Ex. 1 |
| Content of cardanol derivative (before crosslinking) | - | 0.5 wt% | 0.5 wt% | 1 wt% | 2 wt% | 3 wt% |
| Content of crosslinked cardanol derivative | | 0.53 wt% | 0.53 wt% | 1.12 wt% | 2.20 wt% | 3.19 wt% |
| Content of sulfur (S₈) | 70 | 63 | 64 | 58 | 59 | 61 |

Referring to Table 1 and FIG. 4, sulfur (S₈) is insoluble in water at room temperature but has sublimation property, and thus it is thought that sulfur is partially lost at the temperature where crosslinking is carried out. Particularly, in the case of Examples 1 and 2, the coating layer of the crosslinked product of the amphiphilic cardanol derivative is formed to a relatively uniform thickness to minimize the loss of sulfur. However, in the case of Examples 3 and 4, it is thought that the loss of sulfur is partially increased while the thickness of the coating layer becomes slightly non-uniform. In addition, in the case of Example 5, an excessive amount of the crosslinked product of the amphiphilic cardanol derivative covers most part of the surface of KB/S, and thus it is thought that Example 5 shows a decrease in sulfur loss as compared to Examples 3 and 4.

### Structural Analysis of Sulfur-Carbon Composite

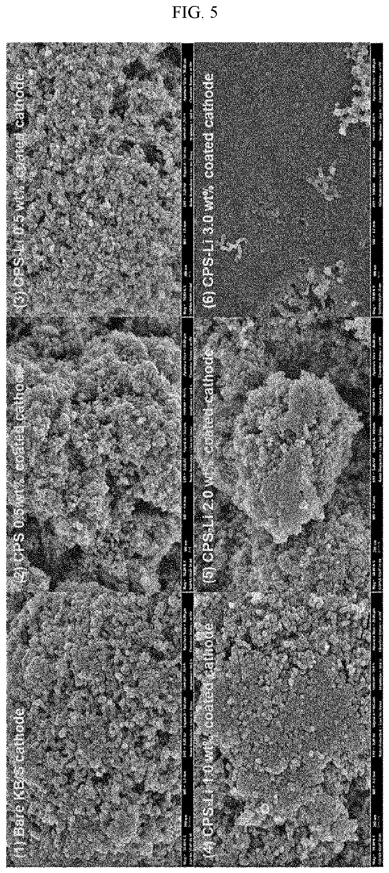

FIG. 5 shows the scanning electron microscopic (SEM) image of the sulfur-carbon composite according to each of Comparative Example 1 and Examples 1-5.

It can be seen from FIG. 5 that each sulfur-carbon composite prepared as described above includes spherical particles having an average particle size (D₅₀) of 35 µm.

In addition, referring to FIG. 5, in the case of Examples 1 and 2, it can be seen that the surface of each sulfur-carbon composite is coated uniformly with the crosslinked product of the amphiphilic cardanol derivative without aggregation. On the contrary, in the case of Examples 3-5 using the amphiphilic cardanol derivative in an increased amount, it can be seen that the crosslinked product causes aggregation, resulting in degradation of the uniformity of the coating structure of the surface of the sulfur-carbon composite.

### [Evaluation of Performance of Lithium-Sulfur Coin Cell]

A lithium-sulfur coin cell was obtained as follows in order to evaluate the performance of a battery when using the sulfur-carbon composite prepared as described above for a positive electrode.

The sulfur-carbon composite prepared as described above, polyacrylic acid (PAA) (Mw 450,000) as a binder and carbon (Super P) as a conductive material were mixed at a ratio of 85:10:5, 0.5 wt% of PVA (Mw 9,500) as a dispersing agent was added thereto, and mixing was carried out by using a mixer (Thinky Co.) to a solid content of 13 wt% in an aqueous phase, thereby providing a positive electrode slurry. The resultant positive electrode slurry was coated on aluminum foil to a thickness of 300 µm by using a doctor blade and dried at 50°C for 14 hours.

The positive electrode and lithium metal as a negative electrode were prepared, a Celgard separator was interposed between the positive electrode and the negative electrode to provide an electrode assembly, and the electrode assembly was dipped in a liquid electrolyte containing 1 M LiTFSI with 0.2 M LiNO₃ in DOL/DME (1/1, v/v). In this manner, a lithium-sulfur coin cell was obtained.

### Evaluation of Discharge Capacity after repeating Cycles

The lithium-sulfur coin cell prepared as described above was subjected to repeated charge/discharge cycles by using a battery cycle tester (WBS3000 battery cycler, WonATech) at a current density of 0.5 C with a cut-off voltage of 1.8-2.8 V (vs Li/Li⁺) at a temperature of 25 °C to carry out a charge/discharge cycle test.

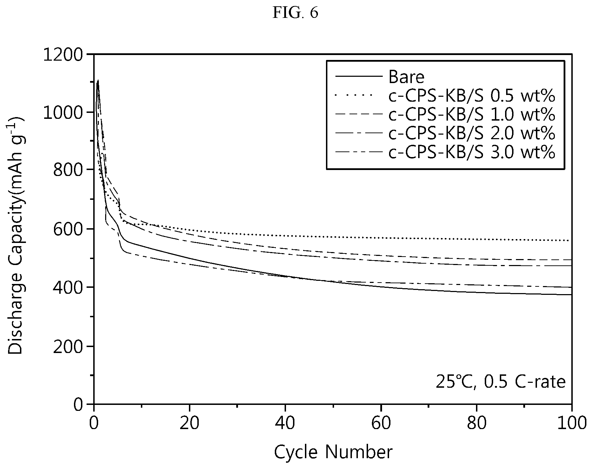

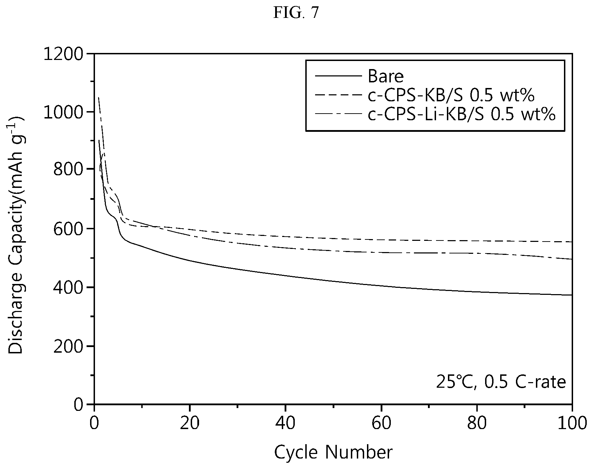

The results of evaluation of the discharge capacity after repeating cycles are shown in FIG. 6 and FIG. 7.

In FIG. 6 and FIG. 7, 'Bare' represents Comparative Example 1 (KB/S), c-CPS-KB/S 0.5 wt% represents Example 1, c-CPS-Li-KB/S 0.5 wt% represents Example 2, c-CPS-KB/S 1 wt% represents Example 3, c-CPS-KB/S 2 wt% represents Example 4, and c-CPS-KB/S 3 wt% represents Example 5.

Referring to FIG. 6, the lithium-sulfur battery using the sulfur-carbon composite according to each of Examples 1 and 3-5 shows an improved initial capacity retention, as compared to Comparative Example 1. It can be seen that Example 1 shows the highest long-term life characteristics, as the cycle number increases.

Referring to FIG. 7, similarly, the lithium-sulfur battery using the sulfur-carbon composite according to each of Examples 1 and 2 shows an improved capacity retention, as compared to Comparative Example 1. Meanwhile, it can be seen that even though the sulfur-carbon composite according to Example 2 includes the crosslinked product of the amphiphilic cardanol derivative containing Li ion according to Preparation Example 2 , as a coating layer, thereby improving the electrical conductivity of the surface of the sulfur-carbon composite, the amphiphilic cardanol derivative according to Preparation Example 1 is more useful in terms of battery capacity.

## Claims

1. A sulfur-carbon composite which comprises:
a porous carbonaceous matrix; and a sulfur-containing compound contained in at least one of the outer surface of the porous carbonaceous matrix and the inner surfaces of the pores of the porous carbonaceous matrix, and **characterised in that** it
is totally or partially surface-coated with a crosslinked product of an amphiphilic cardanol derivative represented by the following Chemical Formula 1: 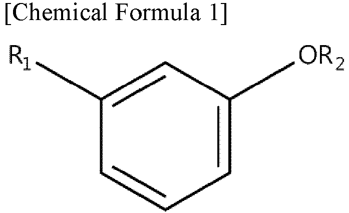
wherein R₁ represents at least one selected from a C10-C50 alkyl group, a C10-C50 alkenyl group and a C10-C50 alkynyl group; and
R₂ represents at least one selected from a C1-C10 alkyl group, a C2-C10 alkenyl group and a C2-C10 alkynyl group, and has a structure substituted with at least one anionic functional group.

2. The sulfur-carbon composite according to claim 1, wherein the surface of the sulfur-carbon composite shows a zeta (ζ) potential, measured according to the description, satisfying the following Formula 1: $- 60 mV \leq ζ \leq 0 mV$

3. The sulfur-carbon composite according to claim 1, wherein at least one of R₁ and R₂ in the amphiphilic cardanol derivative has a structure containing at least one unsaturated bond between carbon atoms.

4. The sulfur-carbon composite according to claim 1, wherein R₂ represents -(CHₓ)ₙQ (wherein x = 0, 1 or 2, n is an integer of 1-10, and Q is an anionic functional group).

5. The sulfur-carbon composite according to claim 1, wherein the anionic functional group comprises at least one functional group selected from -O⁻, -SO₃⁻, -COO⁻, - SO₄²⁻ and a conjugate acid thereof.

6. The sulfur-carbon composite according to claim 1, wherein the anionic functional group contained in R₂ further comprises at least one of alkali metal ions and alkaline earth metal ions, as a cation.

7. The sulfur-carbon composite according to claim 1, wherein the crosslinked product of an amphiphilic cardanol derivative has a crosslinking degree of 15-45% as determined by the following Formula 2 and in which the carbon unsaturation degree is measured according to the description: 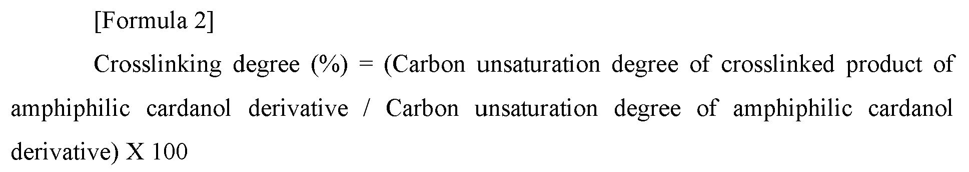 Crosslinking degree (%) = (Carbon unsaturation degree of crosslinked product of amphiphilic cardanol derivative / Carbon unsaturation degree of amphiphilic cardanol derivative) X 100

8. The sulfur-carbon composite according to claim 1, wherein R₁ in the amphiphilic cardanol derivative has at least one structure selected from the following Chemical Formula 2 to Chemical Formula 5:

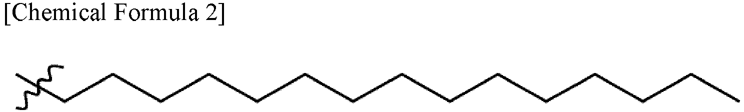

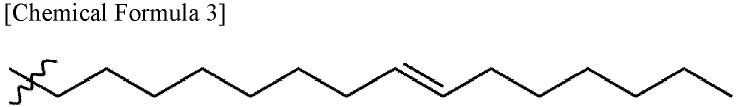

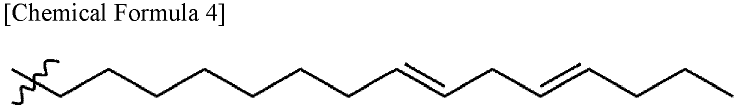

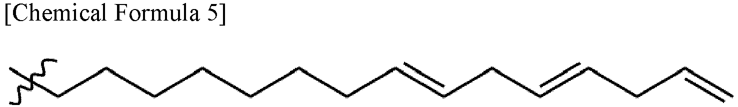

9. The sulfur-carbon composite according to claim 8, wherein the amphiphilic cardanol derivative comprises 1-10 parts by weight of the structure in which R₁ represents Chemical Formula 2, 40-70 parts by weight of the structure in which R₁ represents Chemical Formula 3, 5-25 parts by weight of the structure in which R₁ represents Chemical Formula 4, and 25-40 parts by weight of the structure in which R₁ represents Chemical Formula 5.

10. The sulfur-carbon composite according to claim 1, wherein the total content of the crosslinked product of an amphiphilic cardanol derivative is 0.1-10 wt% based on the total weight of the sulfur-carbon composite.

11. The sulfur-carbon composite according to claim 1, wherein the total content of the crosslinked product of an amphiphilic cardanol derivative is 0.1-1 wt% based on the total weight of the sulfur-carbon composite.

12. A method for preparing a sulfur-carbon composite, comprising the steps of:
preparing a non-coated sulfur-carbon composite comprising: a porous carbonaceous matrix; and a sulfur-containing compound supported in at least one of the outer surface of the porous carbonaceous matrix and the inner surfaces of the pores of the porous carbonaceous matrix;
coating the surface of the non-coated sulfur-carbon composite totally or at least partially with an amphiphilic cardanol derivative; and
carrying out crosslinking of at least a part of the coated amphiphilic cardanol derivative to obtain a sulfur-carbon composite totally or partially surface-coated with a crosslinked product of the amphiphilic cardanol derivative,
wherein the amphiphilic cardanol derivative is represented by the following Chemical Formula 1: 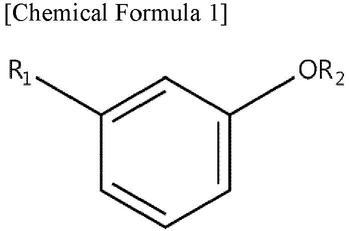
wherein R₁ represents at least one selected from a C10-C50 alkyl group, a C10-C50 alkenyl group and a C10-C50 alkynyl group; and
R₂ represents at least one selected from a C1-C10 alkyl group, a C2-C10 alkenyl group and a C2-C10 alkynyl group, and has a structure substituted with at least one anionic functional group.

13. The method for preparing a sulfur-carbon composite according to claim 12, which further comprises a step of preparing the amphiphilic cardanol derivative through the alkylation of a cardanol derivative represented by the following Chemical Formula 6: 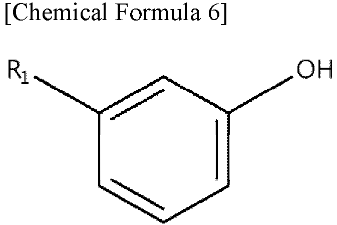 wherein R₁ represents at least one selected from a C10-C50 alkyl group, a C10-C50 alkenyl group and a C10-C50 alkynyl group.

14. A positive electrode for a lithium-sulfur battery, comprising: the sulfur-carbon composite as defined in any one of claims 1 to 11; and a binder polymer.

15. A lithium-sulfur battery comprising a positive electrode, a negative electrode, a separator interposed between the positive electrode and the negative electrode, and an electrolyte, wherein the positive electrode comprises the positive electrode as defined in claim 14.

## Patentansprüche

1. Schwefel-Kohlenstoff-Verbundstoff, der Folgendes enthält:
eine poröse kohlenstoffhaltige Matrix und eine schwefelhaltige Verbindung, die in der äußeren Oberfläche der porösen kohlenstoffhaltigen Matrix und/oder den inneren Oberflächen der Poren der porösen kohlenstoffhaltigen Matrix enthalten ist, **dadurch gekennzeichnet, dass**
er ganz oder teilweise mit einem vernetzten Produkt eines amphiphilen Cardanolderivats, das durch die folgende chemische Formel 1 dargestellt ist, oberflächenbeschichtet ist: 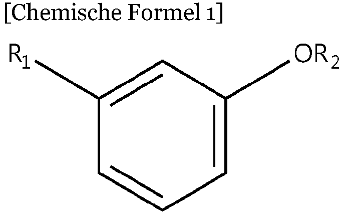
worin R₁ für mindestens eine Gruppe steht, die aus einer C10-C50-Alkylgruppe, einer C10-C50-Alkenylgruppe und einer C10-C50-Alkinylgruppe ausgewählt ist, und
R₂ für mindestens eine Gruppe steht, die aus einer C1-C10-Alkylgruppe, einer C2-C10-Alkenylgruppe und einer C2-C10-Alkinylgruppe ausgewählt ist, und eine Struktur aufweist, die mit mindestens einer anionischen funktionellen Gruppe substituiert ist.

2. Schwefel-Kohlenstoff-Verbundstoff nach Anspruch 1, wobei die Oberfläche des Schwefel-Kohlenstoff-Verbundstoffs ein Zeta(ζ)-Potential zeigt, gemessen gemäß der Beschreibung, wobei der Schwefel-Kohlenstoff-Verbundstoff ein Zeta(ζ)-Potential zeigt, das die folgende Formel 1 erfüllt: $- 60 mV \leq ζ \leq 0 mV$

3. Schwefel-Kohlenstoff-Verbundstoff nach Anspruch 1, wobei mindestens eines von R₁ und R₂ in dem amphiphilen Cardanolderivat eine Struktur aufweist, die mindestens eine ungesättigte Bindung zwischen Kohlenstoffatomen enthält.

4. Schwefel-Kohlenstoff-Verbundstoff nach Anspruch 1, wobei R₂ für -(CHₓ)ₙQ steht, wobei x = 0, 1 oder 2, n eine ganze Zahl von 1-10 ist und Q eine anionische funktionelle Gruppe ist.

5. Schwefel-Kohlenstoff-Verbundstoff nach Anspruch 1, wobei die anionische funktionelle Gruppe mindestens eine funktionelle Gruppe enthält, die aus -O⁻, -SO₃⁻, -COO⁻, - SO₄²⁻ und einer konjugierten Säure davon ausgewählt ist.

6. Schwefel-Kohlenstoff-Verbundstoff nach Anspruch 1, wobei die anionische funktionelle Gruppe, die in R₂ enthalten ist, ferner Alkalimetallionen und/oder Erdalkalimetallionen als ein Kation enthält.

7. Schwefel-Kohlenstoff-Verbundstoff nach Anspruch 1, wobei das vernetzte Produkt eines amphiphilen Cardanolderivats einen Vernetzungsgrad von 15-45 % aufweist, wie durch die folgende Formel 2 bestimmt, und wobei der Kohlenstoff-Ungesättigtheitsgrad
gemäß der Beschreibung gemessen wird: 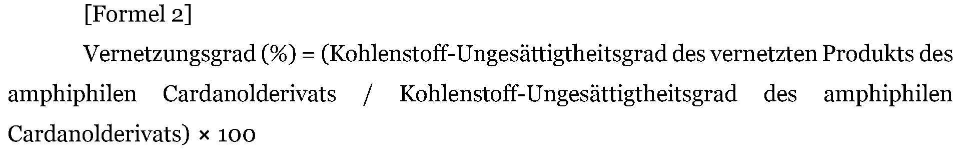 Vernetzungsgrad (%) = (Kohlenstoff-Ungesättigtheitsgrad des vernetzten Produkts des amphiphilen Cardanolderivats / Kohlenstoff-Ungesättigtheitsgrad des amphiphilen Cardanolderivats) × 100

8. Schwefel-Kohlenstoff-Verbundstoff nach Anspruch 1, wobei R₁ in dem amphiphilen Cardanolderivat mindestens eine Struktur aufweist, die aus der folgenden chemischen Formel 2 bis chemischen Formel 5 ausgewählt ist:

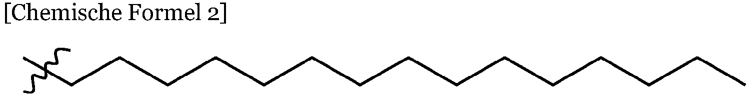

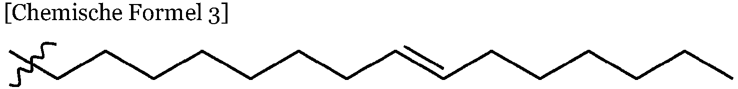

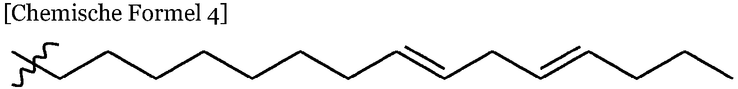

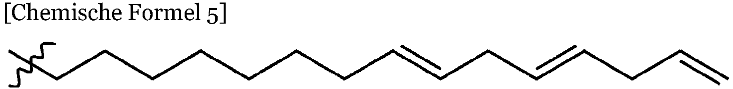

9. Schwefel-Kohlenstoff-Verbundstoff nach Anspruch 8, wobei das amphiphile Cardanolderivat 1-10 Gewichtsteile der Struktur, in der R₁ für die chemische Formel 2 steht, 40-70 Gewichtsteile der Struktur, in der R₁ für die chemische Formel 3 steht, 5-25 Gewichtsteile der Struktur, in der R₁ für die chemische Formel 4 steht, und 25-40 Gewichtsteile der Struktur, in der R₁ für die chemische Formel 5 steht, enthält.

10. Schwefel-Kohlenstoff-Verbundstoff nach Anspruch 1, wobei der Gesamtgehalt des vernetzten Produkts eines amphiphilen Cardanolderivats 0,1-10 Gew.-%, bezogen auf das Gesamtgewicht des Schwefel-Kohlenstoff-Verbundstoffs, beträgt.

11. Schwefel-Kohlenstoff-Verbundstoff nach Anspruch 1, wobei der Gesamtgehalt des vernetzten Produkts eines amphiphilen Cardanolderivats 0,1-1 Gew.-%, bezogen auf das Gesamtgewicht des Schwefel-Kohlenstoff-Verbundstoffs, beträgt.

12. Verfahren zur Herstellung eines Schwefel-Kohlenstoff-Verbundstoffs, das die folgenden Schritte umfasst:
Herstellen eines nicht beschichteten Schwefel-Kohlenstoff-Verbundstoffs, der Folgendes enthält: eine poröse kohlenstoffhaltige Matrix und eine schwefelhaltige Verbindung, die in der äußeren Oberfläche der porösen kohlenstoffhaltigen Matrix und/oder den inneren Oberflächen der Poren der porösen kohlenstoffhaltigen Matrix getragen wird;
Beschichten der Oberfläche des nicht beschichteten Schwefel-Kohlenstoff-Verbundstoffs ganz oder zumindest teilweise mit einem amphiphilen Cardanolderivat; und
Durchführen einer Vernetzung von zumindest einem Teil des beschichteten amphiphilen Cardanolderivats, um einen Schwefel-Kohlenstoff-Verbundstoff zu erhalten, der ganz oder teilweise mit einem vernetzten Produkt des amphiphilen Cardanolderivats oberflächenbeschichtet ist,
wobei das amphiphile Cardanolderivat durch die folgende chemische Formel 1 dargestellt ist: 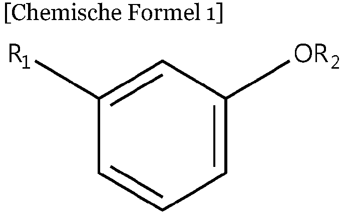
worin R₁ für mindestens eine Gruppe steht, die aus einer C10-C50-Alkylgruppe, einer C10-C50-Alkenylgruppe und einer C10-C50-Alkinylgruppe ausgewählt ist, und
R₂ für mindestens eine Gruppe steht, die aus einer C1-C10-Alkylgruppe, einer C2-C10-Alkenylgruppe und einer C2-C10-Alkinylgruppe ausgewählt ist, und eine Struktur aufweist, die mit mindestens einer anionischen funktionellen Gruppe substituiert ist.

13. Verfahren zur Herstellung eines Schwefel-Kohlenstoff-Verbundstoffs nach Anspruch 12, das ferner einen Schritt des Herstellens des amphiphilen Cardanolderivats durch die Alkylierung eines Cardanolderivats, das durch die folgende chemische Formel 6 dargestellt ist, umfasst: 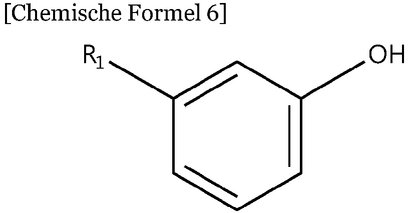 worin R₁ für mindestens eine Gruppe steht, die aus einer C10-C50-Alkylgruppe, einer C10-C50-Alkenylgruppe und einer C10-C50-Alkinylgruppe ausgewählt ist.

14. Positive Elektrode für eine Lithium-Schwefel-Batterie, die Folgendes umfasst: den Schwefel-Kohlenstoff-Verbundstoff nach einem der Ansprüche 1 bis 11 und ein Bindemittelpolymer.

15. Lithium-Schwefel-Batterie, die eine positive Elektrode, eine negative Elektrode, einen zwischen der positiven Elektrode und der negativen Elektrode angeordneten Separator und einen Elektrolyten umfasst, wobei die positive Elektrode die positive Elektrode nach Anspruch 14 umfasst.

## Revendications

1. Composite de soufre-carbone qui comprend :
une matrice carbonée poreuse ; et un composé contenant du soufre contenu dans soit la surface extérieure de la matrice carbonée poreuse, soit les surfaces intérieures des pores de la matrice carbonée poreuse, et
**caractérisé en ce que**
il est revêtu en surface totalement ou partiellement par un produit réticulé d'un dérivé de cardanol amphiphile représenté par la Formule chimique 1 ci-après : 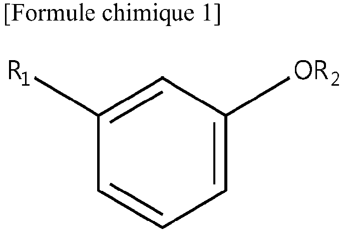
dans lequel R₁ représente un ou plusieurs groupes sélectionnés parmi un groupe alkyle en C10-C50, un groupe alkényle en C10-C50 et un groupe alkynyle en C10-C50 ; et
R₂ représente un ou plusieurs groupes sélectionnés parmi un groupe alkyle en C1-C10, un groupe alkényle en C2-C10 et un groupe alkynyle en C2-C10, et a une structure substituée par un ou plusieurs groupes fonctionnels anioniques.

2. Composite de soufre-carbone selon la revendication 1, dans lequel la surface du composite de soufre-carbone présente un potentiel zêta (ζ), mesuré selon la description, satisfaisant à la Formule 1 ci-après : $- 60 mV \leq ζ \leq 0 mV$

3. Composite de soufre-carbone selon la revendication 1, dans lequel soit R₁, soit R₂ dans le dérivé de cardanol amphiphile a une structure contenant une ou plusieurs liaisons insaturées entre des atomes de carbone.

4. Composite de soufre-carbone selon la revendication 1, dans lequel R₂ représente -(CHₓ)ₙQ (dans lequel x = 0, 1 ou 2, n est un nombre entier de 1 à 10, et Q est un groupe fonctionnel anionique).

5. Composite de soufre-carbone selon la revendication 1, dans lequel le groupe fonctionnel anionique comprend un ou plusieurs groupes fonctionnels sélectionnés parmi -O⁻, -SO₃⁻, -COO⁻, -SO₄²⁻ et un acide conjugué de ces derniers.

6. Composite de soufre-carbone selon la revendication 1, dans lequel le groupe fonctionnel anionique contenu dans R₂ comprend en outre un ou plusieurs ions de métal alcalin et ions de métal alkaloterreux, étant un cation.

7. Composite de soufre-carbone selon la revendication 1, dans lequel le produit réticulé d'un dérivé de cardanol amphiphile a un degré de réticulation de 15 à 45 %, déterminé par la Formule 2 ci-après et dans lequel le degré d'insaturation de carbone est mesuré selon la description 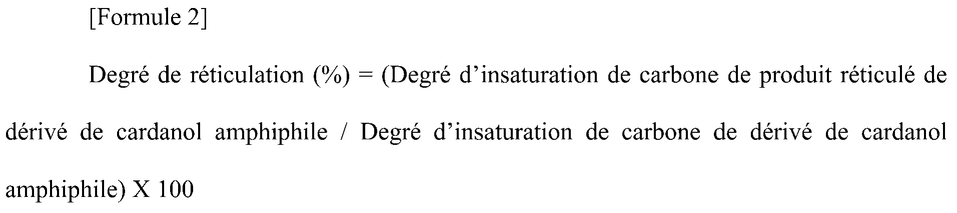 Degré de réticulation (%) = (Degré d'insaturation de carbone de produit réticulé de dérivé de cardanol amphiphile / Degré d'insaturation de carbone de dérivé de cardanol amphiphile) X 100

8. Composite de soufre-carbone selon la revendication 1, dans lequel R₁ dans le dérivé de cardanol amphiphile a une ou plusieurs structures sélectionnées parmi les Formules chimiques 2 à 5 ci-après :

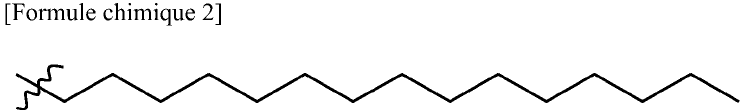

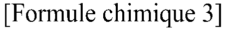

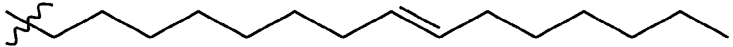

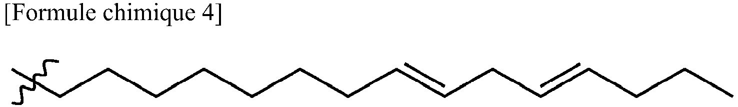

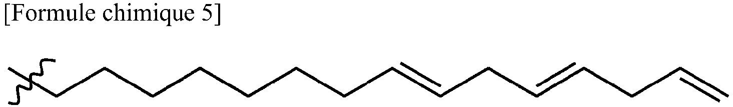

9. Composite de soufre-carbone selon la revendication 8, dans lequel le dérivé de cardanol amphiphile comprend 1 à 10 parties en poids de la structure dans laquelle R₁ représente la Formule chimique 2, 40 à 70 parties en poids de la structure dans laquelle R₁ représente la Formule chimique 3, 5 à 25 parties en poids de la structure dans laquelle R₁ représente la Formule chimique 4, et 25 à 40 parties en poids de la structure dans laquelle R₁ représente la Formule chimique 5.

10. Composite de soufre-carbone selon la revendication 1, dans lequel la teneur totale du produit réticulé d'un dérivé de cardanol amphiphile est 0,1 à 10 % en poids sur la base du poids total du composite de soufre-carbone.

11. Composite de soufre-carbone selon la revendication 1, dans lequel la teneur totale du produit réticulé d'un dérivé de cardanol amphiphile est 0,1 à 1 % en poids sur la base du poids total du composite de soufre-carbone.

12. Procédé de préparation d'un composite de soufre-carbone, comprenant l'étapes consistant à :
préparer un composite de soufre-carbone non-revêtu comprenant : une matrice carbonée poreuse ; et un composé contenant du soufre contenu dans soit la surface extérieure de la matrice carbonée poreuse, soit les surfaces intérieures des pores de la matrice carbonée poreuse ;
revêtir la surface du composite de soufre-carbone non-revêtu totalement ou au moins partiellement par un dérivé de cardanol amphiphile ; et
effectuer une réticulation d'au moins une partie du dérivé de cardanol amphiphile revêtu pour obtenir un composite de soufre-carbone revêtu en surface totalement ou partiellement par un produit réticulé du dérivé de cardanol amphiphile,
dans lequel le dérivé de cardanol amphiphile est représenté par la Formule chimique 1 ci-après : 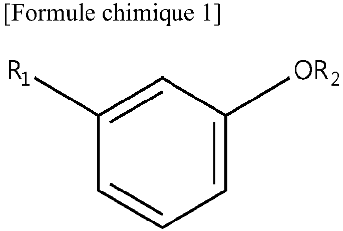
dans lequel R₁ représente un ou plusieurs groupes sélectionnés parmi un groupe alkyle en C10-C50, un groupe alkényle en C10-C50 et un groupe alkynyle en C10-C50 ; et
R₂ représente un ou plusieurs groupes sélectionnés parmi un groupe alkyle en C1-C10, un groupe alkényle en C2-C10 et un groupe alkynyle en C2-C10, et a une structure substituée par un ou plusieurs groupes fonctionnels anioniques.

13. Procédé de préparation d'un composite de soufre-carbone selon la revendication 12, lequel comprend en outre une étape de préparation du dérivé de cardanol amphiphile par l'alkylation d'un dérivé de cardanol représenté par la Formule chimique 6 ci-après : 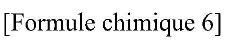 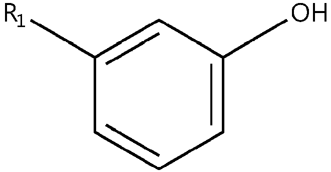 dans lequel R₁ représente un ou plusieurs groupes sélectionnés parmi un groupe alkyle en C10-C50, un groupe alkényle en C10-C50 et un groupe alkynyle en C10-C50.

14. Électrode positive pour une batterie au lithium-soufre, comprenant : le composite de soufre-carbone défini selon l'une quelconque des revendications 1 à 11 ; et un polymère liant.

15. Batterie au lithium-soufre comprenant une électrode positive, une électrode négative, un séparateur interposé entre l'électrode positive et l'électrode négative, et un électrolyte, dans lequel l'électrode positive comprend l'électrode positive définie selon la revendication 14.
